# EUROPEAN PATENT SPECIFICATION

(11) **EP 3 153 392 B1**
(45) Date of publication and mention of the grant of the patent: **09.05.2018**
(21) Application number: 16188883.9
(22) Date of filing: 15.09.2016
(51) Int. Cl.: B62L 1/00, B62L 3/00, B60T 8/00, F16H 63/48

(54) **PARKING BRAKE MECHANISM**
PARKBREMSVORRICHTUNG
MÉCANISME DU FREIN DE STATIONNEMENT

(30) Priority: 29.09.2015 JP 2015191740
(43) Date of publication of application: 12.04.2017
(73) Proprietor: Honda Motor Co., Ltd., Minato-ku Tokyo 107-8556 (JP)
(72) Inventor: Kawasaki, Yohei, Saitama 351-0193 (JP)
(74) Representative: Kiwit, Benedikt

(56) References cited:
- JP-A- H05 288 266
- US-A- 4 356 876
- US-A1- 2008 011 563

## Description

The present invention relates to a vehicle.

Heretofore, a rocking-type saddle-ride type vehicle provided with a parking brake mechanism (a rear wheel lock mechanism) used in parking and a rocking lock mechanism that locks a rocking of a vehicle body is known (for example, refer to Patent Literature 1). In the Patent Literature 1, convenience in pushing a vehicle while walking is enhanced by electrically controlling not to actuate a parking brake mechanism when the rocking lock mechanism is actuated.

Patent Literature 2 discloses a parking apparatus for a three-wheeled motorized vehicle having a front body portion, which is transversely swingable relative to a rear body portion. The apparatus comprises a locking mechanism provided between the front and rear vehicle body portions for disabling the front body portion from swinging, a parking brake mechanism operatively cooperating with a normal wheel brake, such as a disc brake, or alternatively being independent thereof, and a common operating member for operating both the locking and parking brake mechanisms simultaneously. Furthermore, the parking apparatus permits easy movement of the vehicle even after its front vehicle body portion has been locked, and the parking brake engaged.

Patent Literature 3 discloses a parking mechanism, whereby parking lock or lock release control is performed by a hydraulic actuator through locking of the output shaft of the drive system, as the automatic transmission is switched to the parking range or another range. In an emergency such as exhaustion of the battery, the parking release lever of a forced release mechanism can be manually operated to release the lock of the parking mechanism and the vehicle can be moved.

Patent Literature 4 discloses a parking brake device for a vehicle that includes a vehicle operating lever, which is pivotally mounted on a bar-type steering handle, and a parking lever, which is manually movable between an actuated position, at which a parking brake mechanism mounted on the vehicle is actuated, and a release position at which the parking brake mechanism is released. The parking lever is, when moved to the actuated position, positioned in between the grip of the steering handle and the operating lever to thereby prevent the operating lever from being pivoted in an operating direction. The parking brake mechanism includes a brake caliper having a brake actuating member operatively coupled with the parking lever through a cable and by pivoting the parking lever to the actuated position a piston incorporated in the brake caliper applies a braking force to a brake disc.

Patent Literature 1: JP 2005 - 313876 A
Patent Literature 2: US 4 356 876 A
Patent Literature 3: JP H05 288266 A
Patent Literature 4: US 2008/011563 A1

When a vehicle is moved by pushing it, walking, it is desired that a parked state by a parking brake mechanism can be readily released.

The present invention is made in view of the above-mentioned situation and its object is to enable readily releasing a parking brake mechanism in a vehicle.

To achieve the object, the present invention is based upon a vehicle provided with a parking brake mechanism (301) including a stopper gear (315) provided to a shaft (105) that transmits motive power to a driving wheel (3), a lock pole (320) which is provided adjacent to the stopper gear (315) and which locks the driving wheel by being engaged with the stopper gear (315) and a parking brake operating part (302) that engages the lock pole (320) with the stopper gear (315) by operation, and has a characteristic that a lock releasing mechanism (310) that actuates the lock pole (320) to temporarily release the engagement of the lock pole (320) and the stopper gear (315) in a state in which the parking brake operating part (302) remains located in a parking position is provided.

According to the present invention, the vehicle is provided with the lock releasing mechanism that actuates the lock pole to temporarily release the engagement of the lock pole and the stopper gear in the state in which the parking brake operating part remains located in the parking position. Hereby, as the lock releasing mechanism actuates the lock pole, the engagement of the lock pole and the stopper gear can be temporarily released even if the parking brake operating part is located in the parking position. Therefore, the parking brake mechanism can be readily released.

Besides, in the present invention, the lock releasing mechanism (310) is provided with a lock release operating part (311) that actuates the lock releasing mechanism (310) by operation, a first arm (321) having one end connected to the lock release operating part (311) and the other end connected to the lock pole (320) and a second arm (322) which is supported coaxially with the first arm (321) and one end of which is connected to the parking brake operating part (302), and the present invention has a characteristic that the second arm (322) is pressed on the reverse side to the lock pole (320) by first pressing means (324) and the first arm (321) can be turned relatively to the second arm (322) against second pressing means (325) laid between the first arm (321) and the second arm (322).

According to the present invention, the first arm one end of which is connected to the lock release operating part and the other end of which is connected to the lock pole and the second arm one end of which is connected to the parking brake operating part are provided and the first arm can be turned relatively to the second arm against the second pressing means laid between the first arm and the second arm. Hereby, the engagement of the lock pole and the stopper gear can be released by turning the first arm relatively to the second arm against the second pressing means by operating the lock release operating part and the lock releasing mechanism can be realized with simple structure.

Further, the present invention has a characteristic that the lock release operating part (311) is supported in the vicinity of a grab rail (115) which an occupant can grasp.

According to the present invention, as the lock release operating part is supported in the vicinity of the grab rail which an occupant can grasp, the lock release operating part can be readily operated.

Furthermore, the present invention has a characteristic that the lock release operating part (311) is a lever a turn supporting shaft (148) of which is directed in a longitudinal direction of the vehicle and is operated outside in a lateral direction of a vehicle body when a lock is released.

According to the present invention, the lock release operating part is the lever the turn supporting shaft of which is directed in the longitudinal direction of the vehicle and as the lock release operating part is operated outside in the lateral direction of the vehicle body when a lock is released, it can be readily recognized that the lock release operating part is in a released state.

In the vehicle according to the present invention, the parking brake mechanism can be readily released.

Besides, the lock releasing mechanism can be realized with simple structure that the first arm is turned relatively to the second arm.

Further, the lock release operating part in the vicinity of the grab rail can be readily operated.

Furthermore, it can be readily recognized that the lock release operating part is in the released state.

Fig. 1 is a left side view showing a rocking vehicle according to an embodiment of the present invention;
Fig. 2 is a right side view showing the rocking vehicle;
Fig. 3 is a perspective view showing the rocking vehicle viewed from the left front side;
Fig. 4 is a front view showing the rocking vehicle;
Fig. 5 is a left side view showing the front of the rocking vehicle;
Fig. 6 is a front view showing a rocker mechanism and its circumferential parts;
Fig. 7 is a perspective view showing the rocker mechanism and its circumferential parts respectively viewed from the left front side;
Fig. 8 is a rear view showing the rocker mechanism and its circumferential parts;
Fig. 9 is a schematic diagram showing the configuration of a lock mechanism of the rocking vehicle;
Fig. 10 is a sectional view viewed along a line X-X shown in Fig. 1;
Fig. 11 is a side view showing the configuration of a parking brake actuating part and its circumferential parts;
Fig. 12 is a side view showing the configuration of the parking brake actuating part;
Fig. 13 is a side view showing a lock pole;
Fig. 14 is a side view showing a first arm;
Fig. 15 is a side view showing a second arm;
Fig. 16 is a side view showing second pressing means;
Fig. 17 shows "an operating state" in which a parking brake mechanism is operated; and
Fig. 18 shows "a released state" of the parking brake mechanism.

Referring to the drawings, one embodiment of the present invention will be described below. In the description, directions such as longitudinal one, lateral one and vertical one shall be the same as directions in a vehicle unless otherwise specified. Besides, a reference sign FR shown in some drawings denotes the front side of the vehicle, a reference sign UP denotes the upside of the vehicle, and a reference sign LH denotes the left side of the vehicle.

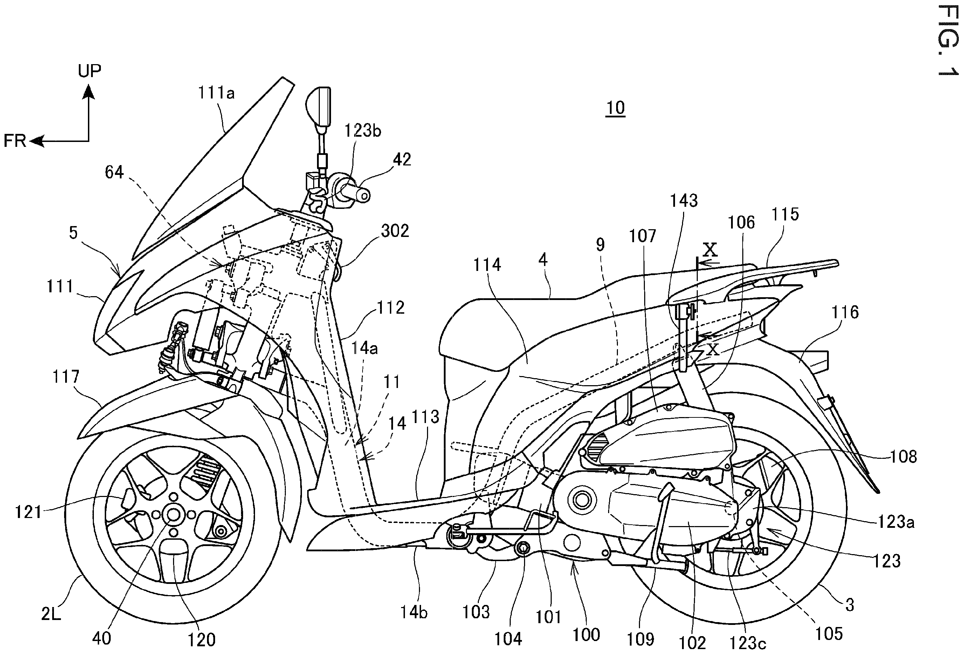

Fig. 1 is a left side view showing a rocking vehicle according to an embodiment of the present invention. In Fig. 1, only the left one of a pair provided laterally is shown.

The rocking vehicle 10 is a three-wheeled vehicle provided with a body frame 11, a pair of front wheels 2L, 2R respectively laterally provided on the downside of the front of the body frame 11, one rear wheel 3 (driving wheel) provided in the center in a vehicle width direction in the rear of the rocking vehicle 10 and a power unit 100 that drives the rear wheel 3 which is a driving wheel. Besides, the rocking vehicle 10 is provided with a rocker mechanism 64 that rocks a vehicle body on the front side of the body frame 11.

The rocking vehicle 10 is a saddle-ride type vehicle provided with a seat 4 for an occupant to be seated with the occupant straddling the saddle-ride type vehicle on the rear side. Besides, the rocking vehicle 10 is provided with a body cover 5 that covers the body frame 11.

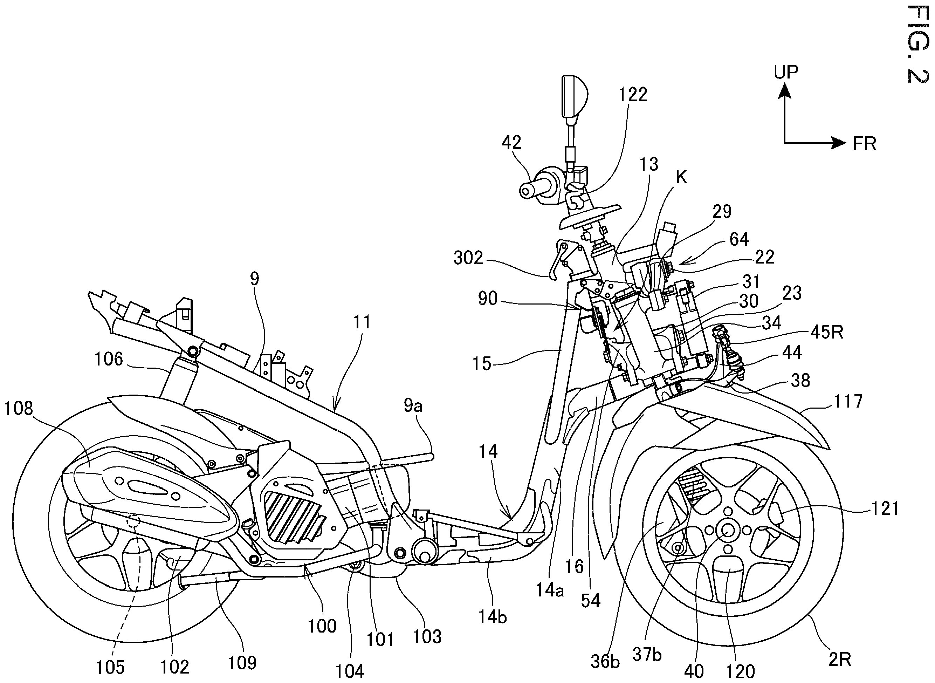

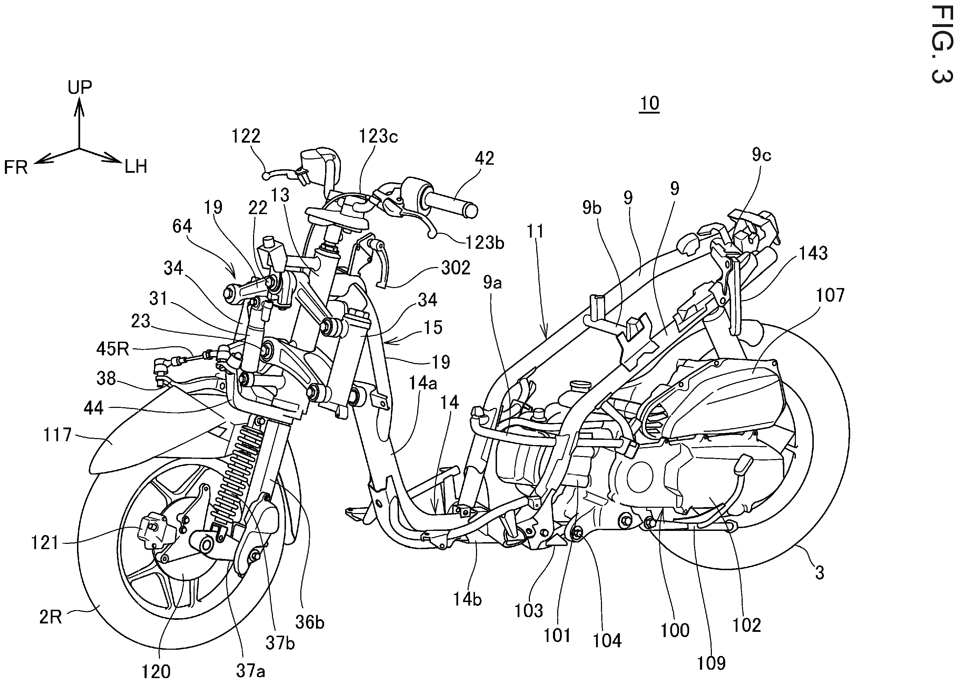

Fig. 2 is a right side view showing the rocking vehicle 10. Fig. 3 is a perspective view showing the rocking vehicle 10 viewed from the left front side. Figs. 2 and 3 show a state in which exterior parts such as the seat 4 and the body cover 5 are removed. Besides, in Fig. 2, peripheral structure of the left front wheel 2L is not shown.

As shown in Figs. 1 to 3, the body frame 11 is provided with a head pipe 13 at its front end, a main frame 14 extended downward in a rear direction from the head pipe 13 and a pair of right and left rear frames 9 extended upward in the rear direction from a rear end of the main frame 14.

The main frame 14 is provided with a main frame front 14a extended downward in the rear direction from the head pipe 13 and a main frame rear 14b substantially horizontally extended backward from a lower end of the main frame front 14a. The rear frames 9 are coupled in the vehicle width direction by plural cross members 9a, 9b, 9c.

The power unit 100 is arranged at the back of the main frame 14 and on the downsides of the rear frames 9. The power unit 100 is a unit swing type in which an engine 101 and a transmission case 102 housing a belt type continuously variable transmission mechanism (not shown) are integrated, and is also provided with a function as a swing arm that supports the rear wheel 3. The output of the engine 101 is transmitted to the rear wheel 3 as the driving wheel via the continuously variable transmission mechanism.

The power unit 100 is coupled to the rear end of the main frame 14 via a link member 103 coupled to the front of the power unit and can be vertically swung with a pivot 104 provided to the link member 103 in the center.

The transmission case 102 is extended to the left side of the rear wheel 3 on the downside of the left rear frame 9 and the rear wheel 3 is supported to a rear wheel axle 105 provided to a rear end of the transmission case 102. A rear suspension 106 is laid between the rear end of the transmission case 102 and the rear frame 9. An air cleaner box 107 of the engine 101 is provided on the upside of the transmission case 102. A muffler 108 of the engine 101 is arranged on the right side of the rear wheel 3.

A main stand 109 for parking the rocking vehicle 10 in an upright posture is supported by a lower part of the power unit 100.

The body cover 5 is provided with a front cover 111 that covers the rocker mechanism 64 and the head pipe 13 from the front side and the side, a leg shield 112 that covers the main frame front 14a, a step floor 113 that covers the main frame rear 14b from the upside and a rear cover 114 that covers the rear frames 9 on the downside of the seat 4. A wind screen 111a is provided to the front cover 111.

A grab bar 115 for a pillion passenger seated on the rear of the seat 4 to grasp is provided to rear ends of the rear frames 9. The grab bar 115 (grab rail) is located on the right and left sides of the rear of the seat 4.

The rear wheel 3 is covered by a rear fender 116 from the upside. The front wheels 2L, 2R are covered with a pair of left and right front fenders 117 from each upside.

As shown in Fig. 1, for a braking device of each front wheel 2L, 2R, the rocking vehicle 10 is provided with a brake disc 120 provided to each front wheel 2L, 2R, a brake caliper 121 to which oil pressure is applied via a brake hose and a front wheel brake lever 122 (see Fig. 2) to which operation for the brake caliper 121 is input. The front wheel brake lever 122 is provided to an end (an end on the right side) of one of the right and left sides of a handlebar 42 for steering.

Besides, for a rear wheel braking device 123, the rocking vehicle 10 is provided with a drum brake. The rear wheel braking device 123 is provided with a drum 123a provided to the rear wheel 3, a brake lever 123b to which operation for the drum 123a is input and a brake operation cable 123c that connects the brake lever 123b and the drum 123a. The brake lever 123b is provided to an end of the other (an end on the left side) of the right and left sides of the handlebar 42 for steering. When the brake lever 123b is operated, a brake shoe provided inside the drum 123a is pressed on an inner circumference of the drum 123a and the rear wheel 3 is braked.

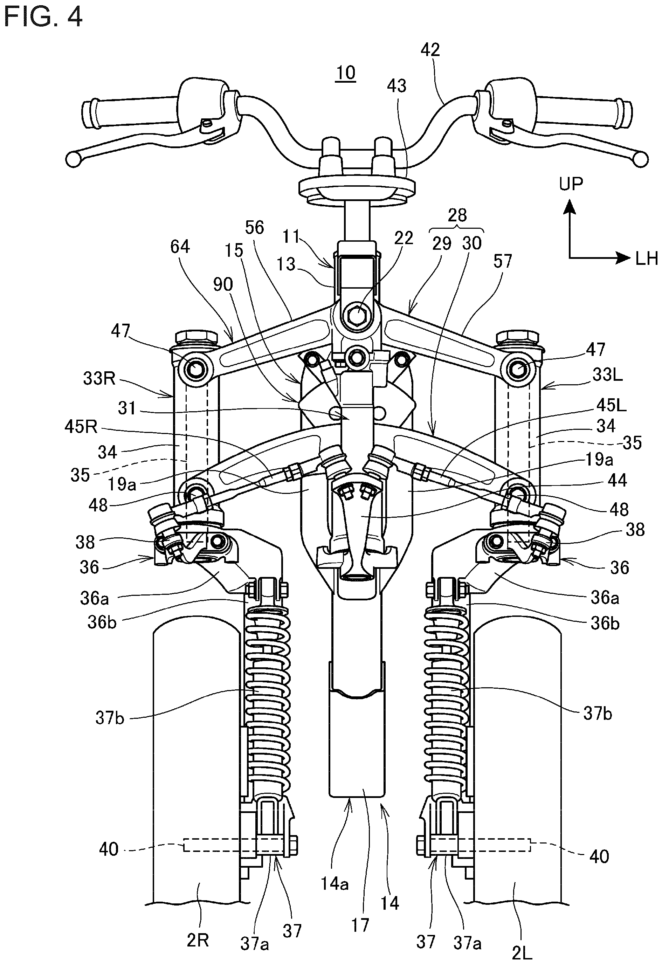

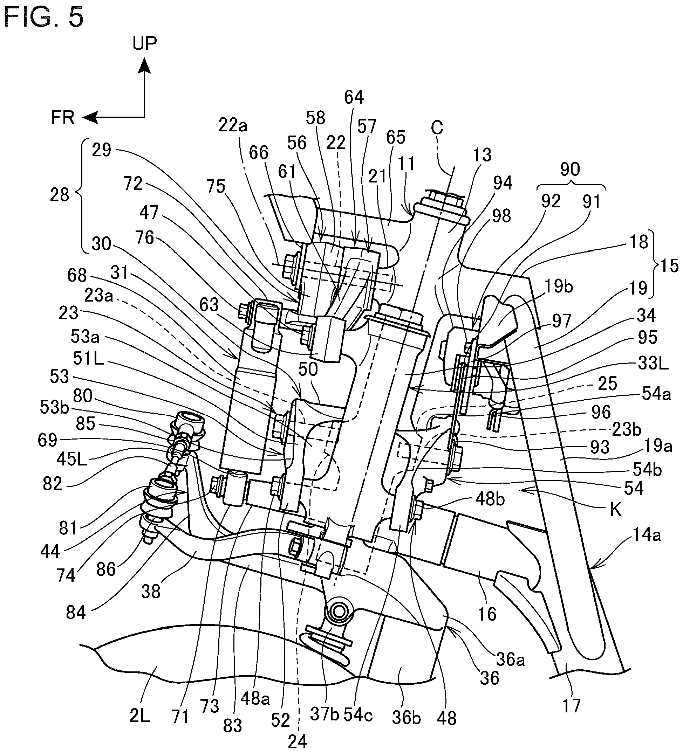

Fig. 4 is a front view showing the rocking vehicle 10 viewed from the front side. Fig. 5 is a left side view showing the front of the rocking vehicle 10. Detailedly, Fig. 5 is a front view viewed along an axis 22a of an upper rocker shaft 22 described later.

The cylindrical head pipe 13 is arranged in a state in which its axis C is inclined backward in a side view. The head pipe 13 is located in the center in the vehicle width direction of the rocking vehicle 10.

The main frame front 14a is provided with an upper main frame 15 extended backward and downward from the back of an upper part of the head pipe 13, a lower main frame 16 extended backward and downward from the back of a lower part of the head pipe 13 and a rear main frame 17 extended downward from a rear end of the lower main frame 16. The lower main frame 16 is arranged in a posture substantially perpendicular to the head pipe 13. The rear main frame 17 is extended backward and downward with greater inclination than the lower main frame 16.

The upper main frame 15 is provided with a frame upper end 18 extended backward in substantial parallel with the lower main frame 16 from the head pipe 13 and a pair of right and left forked frames 19 forked laterally from a rear end of the frame upper end 18 and extended downward.

The forked frames 19 are arranged with the rear lower with the substantially same inclination as the lower main frame 16 and are opposite to the back of the head pipe 13. An upper end of each forked frame 19 is connected to the side of the rear end of the frame upper end 18 and a lower end of each forked frame is connected to the side of an upper end of the rear main frame 17. Each forked frame 19 is provided with an intermediate part 19a extended sideways to be outside the head pipe 13 in the vehicle width direction and the intermediate parts 19a are extended mutually in substantial parallel.

That is, space K at the back of the head pipe which is enclosed by the head pipe 13, the upper main frame 15 and the lower main frame 16 is formed between the head pipe 13 and the main frame front 14a in a side view.

A columnar support 21 protruded forward is provided to the front of the upper part of the head pipe 13 and the upper rocker shaft 22 like a bolt (the center of a rocking of an upper arm) is fastened and fixed to the support 21. The upper rocker shaft 22 is arranged in a posture in which the rear is lower in a side view and its end is screwed to the support 21. Detailedly, in the side view, an inclination in which the rear is lower of the axis 22a of the upper rocker shaft 22 is slightly smaller than an inclination of a plane (not shown) perpendicular to the axis C of the head pipe 13. Fig. 4 is the front view showing the front of the rocking vehicle 10 viewed along the axis 22a of the upper rocker shaft 22.

A lower rocker shaft (the center of a rocking of a lower arm) 23 extended forward and backward from the head pipe 13 is provided to the lower part of the head pipe 13. The lower rocker shaft 23 and the upper rocker shaft 22 are arranged in the center in the vehicle width direction. The lower rocker shaft 23 is arranged in parallel with the upper rocker shaft 22 and is extended so that the rear is lower. Detailedly, the lower rocker shaft 23 is provided with a first lower rocker shaft 23a diagonally extended forward and upward from the front of the head pipe 13 and a second lower rocker shaft 23b diagonally extended backward and downward from the back of the head pipe 13. The first lower rocker shaft 23a and the second lower rocker shaft 23b are coaxially arranged.

A columnar front support 24 protruded forward is provided to the front of the lower part of the head pipe 13. The first lower rocker shaft 23a is formed in the shape of a bolt and its end is fastened and fixed to the front support 24 from the front side.

A columnar rear support 25 protruded backward is provided to the back of the lower part of the head pipe 13. The second lower rocker shaft 23b is formed in the shape of a bolt and its end is fastened and fixed to the rear support 25 from the rear side.

A rocker arm 28 laterally rockable is provided in front of the head pipe 13.

The rocker arm 28 is provided with an upper arm 29 laterally rockable with the upper rocker shaft 22 in the center and a lower arm 30 laterally rockable with the lower rocker shaft 23 in the center.

A roll damper (a damper) 31 that inhibits displacement (displacement in a direction of a roll) around the upper rocker shaft 22 and the lower rocker shaft 23 of the rocker arm 28 is provided in front of the rocker arm 28.

The upper arm 29 and the lower arm 30 are laterally (in the vehicle width direction) extended from the center in the vehicle width direction, and a left front wheel supporting member 33L and a right front wheel supporting member 33R that respectively turnably support the left and right front wheels 2L, 2R are respectively supported by respective left and right ends of the upper arm 29 and the lower arm 30.

The left front wheel supporting member 33L and the right front wheel supporting member 33R are provided with side pipes 34 coupled to the upper arm 29 and the lower arm 30, steering shafts 35 (see Fig. 4) journaled inside the side pipes 34, bottom bridges 36 fixed to respective lower ends of the steering shafts 35, and link type suspension mechanisms 37 coupled to the bottom bridges 36.

The bottom bridge 36 is laterally turnable with the steering shaft 35 as an axis in the center. The bottom bridge 36 is provided with a backward extended part 36a extended inside in the vehicle width direction and backward and a support arm 36b extended downward from the rear of the backward extended part 36a. The tie rod coupling arm 38 extended forward on the upside of each front wheel 2L, 2R is attached to the front of the bottom bridge 36.

The link type suspension mechanism 37 is provided with a bottom link 37a extended forward from a lower end of the support arm 36b and a cylindrical shock absorber 37b laid between a front end of the bottom link 37a and the backward extended part 36a. The bottom link 37a is vertically rockably supported with its rear end in the center and each front wheel 2L, 2R is journale d to an axle 40 provided to the front end of the bottom link 37a.

A handlebar shaft (not shown) is journaled in the head pipe 13. A handlebar 42 for the occupant to operate is attached to an upper end of the handlebar shaft via a handlebar post 43.

The handlebar shaft is extended downward through the head pipe 13 and a tie rod support arm 44 integrally rotated with the handlebar shaft is fixed to a lower end of the handlebar shaft. The tie rod support arm 44 is coupled to the tie rod coupling arms 38 via a pair of left and right tie rods 45L, 45R extended in the vehicle width direction.

When the handlebar 42 is steered, the bottom bridge 36 is turned with the steering shaft 35 as an axis in the center via the tie rod support arm 44, the tie rod 45L, 45R and the tie rod coupling arm 38, and hereby, the front wheels 2L, 2R are operated in a direction in which the handlebar 42 is steered.

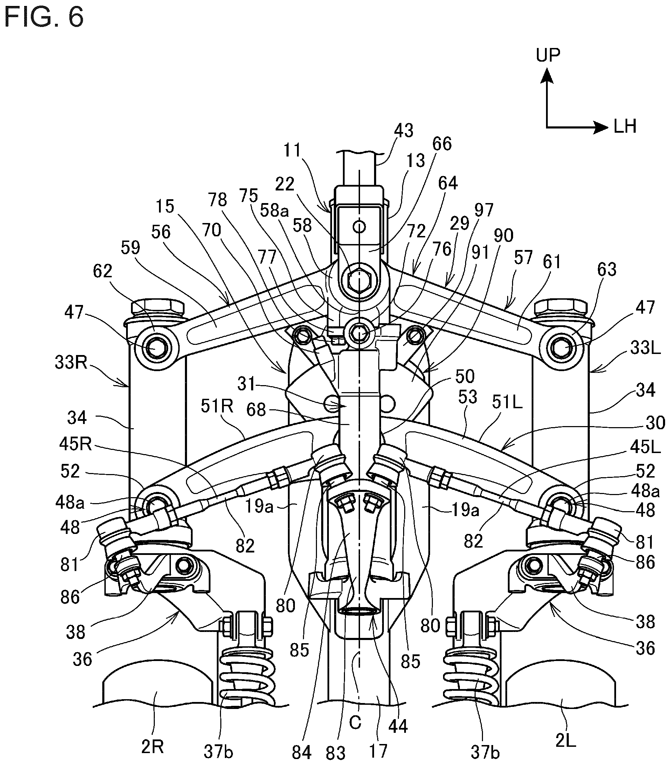

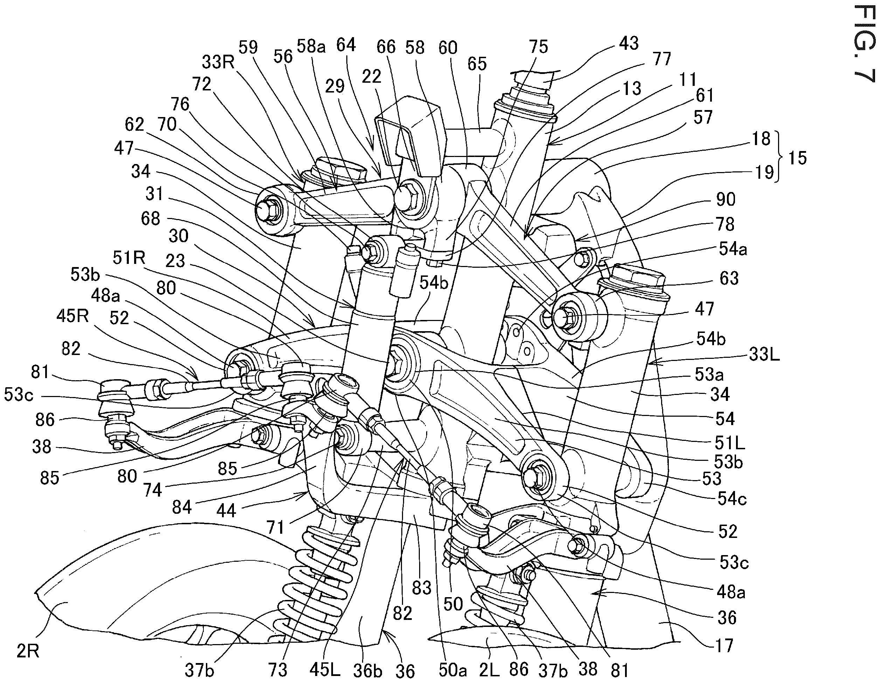

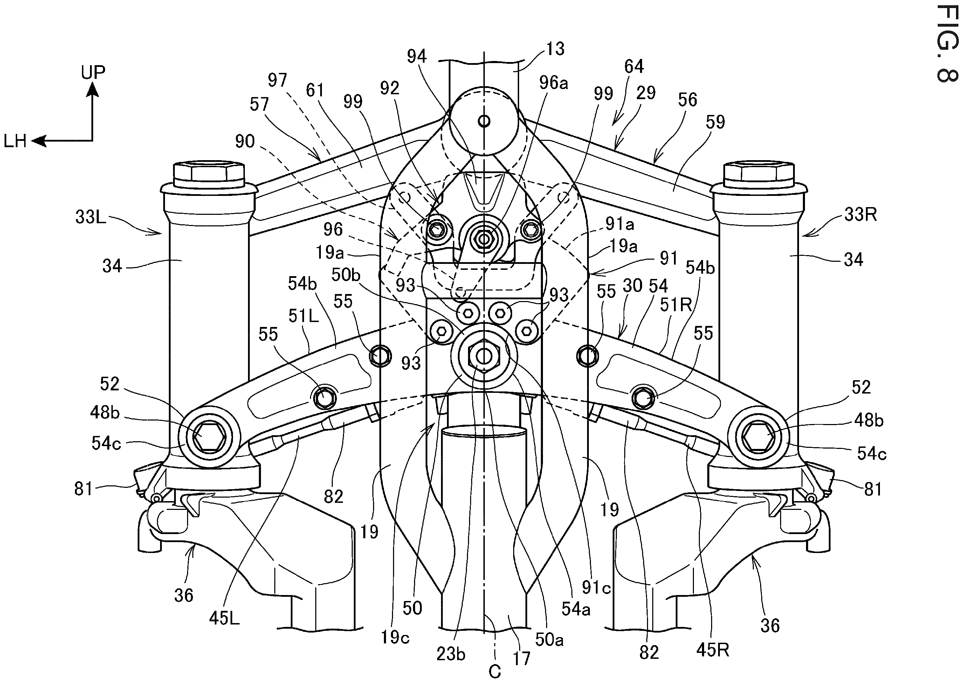

Fig. 6 is a front view showing peripheral parts of the rocker mechanism 64. Fig. 7 is a perspective view showing the peripheral parts of the rocker mechanism 64 viewed from the left front side. Fig. 8 is a rear view showing the peripheral parts of the rocker mechanism 64.

As shown in Figs. 4 to 8, the side members 34 are located on the right and left sides of the head pipe 13 and are arranged in parallel with the head pipe 13.

Each side member 34 is provided with an upper coupling shaft 47 extended forward from the front of an upper part and a lower coupling shaft 48 extended forward and backward from a front face and a rear face of a lower part. The upper coupling shaft 47 and the lower coupling shaft 48 are arranged in parallel with the upper rocker shaft 22 and the lower rocker shaft 23.

The upper coupling shaft 47 is formed in the shape of a bolt and its end is fastened and fixed to the upper part of the side member 34 from the front side.

Each lower coupling shaft 48 is provided with a first lower coupling shaft 48a provided to the front face of the side member 34 and a second lower coupling shaft 48b provided to the rear face of the side member 34. The first lower coupling shaft 48a is formed in the shape of a bolt and its end is fastened and fixed to the side member 34 from the front side. The second lower coupling shaft 48b is formed in the shape of a bolt and its end is fastened and fixed to the side member 34 from the rear side. The first lower coupling shaft 48a and the second lower coupling shaft 48b are coaxially provided.

The lower arm 30 is integrally provided with a lower rocking central part 50 journaled to the lower rocker shaft 23 and lower arm parts (left and right arms) 51L, 51R respectively extended laterally from the lower rocking central part 50 and coupled to the side members 34. The lower arm parts 51L, 51R are laterally symmetrically formed with the lower rocking central part 50 in the center.

The lower rocking central part 50 is cylindrically formed and is journaled to the lower rocker shaft 23 via a bearing fitted to its inner circumference. A lower end 50a (see Fig. 7) of a periphery of the lower rocking central part 50 is located in the center in the vehicle width direction.

Each lower arm part 51L, 51R is provided with a cylindrical end 52 outside in the vehicle width direction. Each lower arm part 51L, 51R is journaled to the lower coupling shaft 48 via a bearing fitted to an inner circumference of the end 52.

The lower arm parts 51L, 51R are inclined so that they are located lower farther in the vehicle width direction from the lower rocking central part 50 and the ends 52 are located on the downsides of the lower rocking central part 50. That is, the lower arm is formed in an inverse V type in a front view.

Besides, the lower arm 30 is provided with a front-side lower arm 53 arranged in front of the head pipe 13 and a rear-side lower arm 54 arranged at the back of the head pipe 13. The lower arm 30 is provided with the front-side lower arm 53 and the rear-side lower arm 54 longitudinally holding the head pipe 13. The front-side lower arm 53 and the rear-side lower arm 54 are connected by plural bolts 55 (see Fig. 8) inserted into the rear-side lower arm 54 from the rear side.

Detailedly, the front-side lower arm 53 is provided with a front-side rocking central part 53a journaled to the first lower coupling shafts 48a, right and left front-side arm parts 53b extended on front sides of the side members 34 from the front-side rocking central part 53a and front-side ends 53c journaled to the first lower coupling shafts 48a.

The rear-side lower arm 54 is provided with a rear-side rocking central part 54a journaled to the second lower coupling shafts 48b, right and left rear-side arm parts 54b extended on rear sides of the side members 34 from the rear-side rocking central part 54a and rear-side ends 54c journaled to the second lower coupling shafts 48b.

The lower rocking central part 50 is configured by the front-side rocking central part 53a and the rear-side rocking central part 54a. The lower arm parts 51L, 51R are configured by the front-side arm parts 53b and the rear-side arm parts 54b. The ends 52 are configured by the front-side ends 53c and the rear-side ends 54c.

The upper arm 29 is laterally divided and is provided with a right upper arm 56 extended to the right (one-side) side member 34 from the upper rocker shaft 22 and a left upper arm 57 extended to the left (the other-side) side member 34 from the upper rocker shaft 22.

The right upper arm 56 is provided with a first upper rocking central part 58 journaled to the upper rocker shaft 22 and an upper anterior arm part 59 extended rightward from the first upper rocking central part 58 and coupled to the right side member 34.

The left upper arm 57 is provided with a second upper rocking central part 60 journaled to the upper rocker shaft 22 at the back of the first upper rocking central part 58 and an upper posterior arm part 61 extended leftward from the second upper rocking central part 60 and coupled to the left side member 34.

That is, the right upper arm 56 and the left upper arm 57 are longitudinally arranged on the upper rocker shaft 22.

The first upper rocking central part 58 is cylindrically formed and is journaled to the upper rocker shaft 22 via a bearing fitted to its inner circumference. A lower end 58a of a periphery of the first upper rocking central part 58 is located in the center in the vehicle width direction.

The upper anterior arm part 59 is provided with a cylindrical end 62 at an outer end in the vehicle width direction. The upper anterior arm part 59 is journaled to the upper coupling shaft 47 of the right side member 34 via a bearing fitted to an inner circumference of the end 62.

The upper posterior arm part 61 is provided with a cylindrical end 63 at an outer end in the vehicle width direction. The upper posterior arm part 61 is journaled to the upper coupling shaft 47 of the left side member 34 via a bearing fitted to an inner circumference of the end 63.

The right upper arm 56 and the left upper arm 57 are inclined so that they are located lower farther in the vehicle width direction from the upper rocker shaft 22 and the ends 62, 63 are located on the downsides of the first upper rocking central part 58 and the second upper rocking central part 60. The ends 62, 63 are located in the same vertical positions. That is, the upper arm 29 configured by joining the right upper arm 56 and the left upper arm 57 is formed in an inverse V type in a front view.

Besides, the right upper arm 56 is curved so that it is located on the rear side outside in the vehicle width direction, the left upper arm 57 is curved so that it is located on the front side outside in the vehicle width direction, and the ends 62, 63 are located in the same longitudinal positions.

In this embodiment, the rocker mechanism 64 is configured in the vicinity of the head pipe 13 by rockably supporting the lower arm 30 by the head pipe 13 via the lower rocker shaft 23, rockably supporting the right upper arm 56 and the left upper arm 57 by the head pipe 13 via the upper rocker shaft 22 and turnably coupling the side members 34 to the lower arm 30 and the upper arm 29 via the upper coupling shafts 47 and the lower coupling shafts 48.

That is, the rocker mechanism 64 is a multinodal link mechanism having the head pipe 13, the lower arm 30, the right upper arm 56, the left upper arm 57 and the side members 34 as a node (a link) and having the lower rocker shaft 23, the upper rocker shaft 22, the upper coupling shafts 47 and the lower coupling shafts 48 as a turning shaft (a rocking shaft).

The rocking vehicle 10 is laterally swung by steering operation of the handlebar 42 and the displacement of the center of gravity by the occupant in an inclined state. Detailedly, when the rocking vehicle 10 is inclined, the head pipe 13 is inclined with the lower rocker shaft 23 in the center, the side members 34 are inclined with the upper arm 29 and the lower arm 30 in the center, and the front wheels 2L, 2R closely come in contact with the ground in an inclined state. That is, the front wheels 2L, 2R are swung via the upper arm 29 and the lower arm 30 in accordance with the rocking of the body frame 11. In this state, the upper arm 29 and the lower arm 30 are displaced in an inclined direction in a state in which they are kept substantially horizontal with the ground and the head pipe 13 is inclined at the substantially same angle as the side members 34. That is, in a state in which the rocking vehicle 10 is inclined, the whole except the upper arm 29 and the lower arm 30 is integrally inclined in the front of the rocking vehicle 10.

The head pipe 13 is provided with a forward extended bar 65 extended forward through the upside of the upper arm 29 at its upper end and a plate like stay 66 extended downward toward the front side of the first upper rocking central part 58 of the right upper arm 56 is provided at a front end of the forward extended bar 65.

The upper rocker shaft 22 in the shape of a bolt pierces the stay 66 from the front side, its head abuts on the front of the stay 66, and the first upper rocking central part 58 and the second upper rocking central part 60 are held between the stay 66 and the support 21. That is, the upper rocker shaft 22 is supported by the stay 66 and the support 21 from both sides. Therefore, the supporting rigidity of the upper arm 29 can be enhanced.

The roll damper 31 is a liquid-operated damper formed in the shape of a vertically longer cylinder. The roll damper 31 is provided with a cylindrical cylinder part 68 both ends of which are closed, a piston rod 69 which is inserted into the cylinder part 68 from a lower end of the cylinder part 68 and which houses a piston (not shown) at an upper end inside the cylinder part 68, a spring (not shown) inserted between the bottom side of the piston and the bottom of the cylinder part 68 in a compressed state and an adjustment mechanism 70 that adjusts an extent of damping action of the roll damper 31.

In the cylinder part 68, oil as fluid that damps a motion of the piston is sealed. The cylinder part 68 is axially partitioned into a first fluid chamber and a second fluid chamber by the piston.

The piston is provided with an oil channel through which oil can pass in an axial direction of the piston. The roll damper 31 functions as a damper because the motion of the piston is inhibited by the resistance of oil caused in the oil channel according to the movement of the piston.

The adjustment mechanism 70 is a mechanism that varies the area of the oil channel connecting the first fluid chamber and the second fluid chamber for example so as to vary the resistance of oil.

To reciprocate the roll damper 31 in its extended direction by relatively displacing the cylinder part 68 and the piston rod 69, a load that compresses the spring is required.

The roll damper 31 is provided with a cylindrical lower fulcrum 71 connected to a lower end of the head pipe 13 and a cylindrical upper fulcrum 72 connected to the upper arm 29.

The lower fulcrum 71 is provided to a lower end of the piston rod 69. The upper fulcrum 72 is provided to an upper end of the cylinder part 68.

The head pipe 13 is provided with a damper stay 73 in the shape of a bar extended forward from a position under the lower rocker shaft 23 at the front. A front end of the damper stay 73 is located in front of a front end of the lower arm 30. A lower damper supporting shaft (a damper supporting part) 74 extended forward in parallel with the lower rocker shaft is provided at the front end of the damper stay 73. The lower damper supporting shaft 74 is formed in the shape of a bolt and its end is fastened and fixed to the front end of the damper stay 73.

The lower fulcrum 71 of the roll damper 31 is journaled to the lower damper supporting shaft 74 via a bearing fitted to the inner circumference.

The right upper arm 56 is provided with an extended part 75 extended downward from the first upper rocking central part 58 and an upper damper supporting shaft 76 that supports the upper fulcrum 72 of the roll damper 31 is attached to the extended part 75.

Detailedly, the upper damper supporting shaft 76 is formed in the shape of a bolt and its end is fastened and fixed to a support stay 77 attached to a bottom of the extended part 75. The support stay 77 is fixed to the bottom of the extended part 75 by a stay fixing bolt 78 inserted into the support stay 77 from the downside. The upper damper supporting shaft 76 is swung integrally with the right upper arm 56.

The upper damper supporting shaft 76 is extended forward in parallel with the lower damper supporting shaft 74 and a front end of the upper damper supporting shaft 76 is located in front of a front end of the right upper arm 56.

The upper fulcrum 72 of the roll damper 31 is journaled to the upper damper supporting shaft 76 via a bearing fitted to the inner circumference.

The roll damper 31 is arranged in front of the lower arm 30, and the upper fulcrum 72 and the lower fulcrum 71 are provided with them vertically having the lower arm 30 between them.

The roll damper 31 is arranged so that an axis of the roll damper 31 is overlapped with the axis C of the head pipe 13 in a front view and the axis is substantially perpendicular to the axis 22a and the first lower rocker shaft 23a in a side view.

When the right upper arm 56 is swung, the roll damper 31 is laterally swung with the lower damper supporting shaft 74 in the center and as the cylinder part 68 is reciprocated via the upper damper supporting shaft 76, the roll damper is axially extended and contracted.

Each tie rod 45L, 45R is provided with an inner end (an upper end of the tie rod) 80 coupled to the tie rod support arm 44, an outer end (a lower end of the tie rod) 81 coupled to the tie rod coupling arm 38 and a body of the rod 82 that connects the inner end 80 and the outer end 81. The body of the rod 82 is linearly extended.

The tie rod support arm 44 is provided with a forward extended part 83 extended forward on the downside of the damper stay 73 from a position at the lower end of the head pipe 13 and an upward extended part 84 which rises upward from a front end of the forward extended part 83 and which is extended in front of a lower end of the roll damper 31.

A pair of right and left inner end coupling parts 85 to which the inner ends 80 of the tie rods 45L, 45R are coupled are provided at an upper end of the upward extended part 84. The inner end coupling parts 85 are arranged symmetrically in a lateral direction on the basis of the axis C of the head pipe 13 and are located outside the lower rocking central part 50. The inner end coupling parts 85 are a shaft protruded upward from the upward extended part 84 and are arranged in a state in which they are inclined so that the side of each upper end is located outside in the vehicle width direction in a front view. Besides, the inner end coupling parts 85 are arranged in a state in which they are inclined so that the side of each upper end is located at the back in a side view.

The inner ends 80 of the tie rods 45L, 45R are turnably coupled to the inner end coupling parts 85 via each ball joint and others.

Front ends of the tie rod coupling arms 38 provided to the bottom bridges 36 are located on the downside and in front of a front end of the upward extended part 84 of the tie rod support arm 44. The outer end coupling parts 86 to which the outer ends 81 of the tie rods 45L, 45R are coupled are provided at the front ends of the tie rod coupling arms 38. The outer end coupling parts 86 are a shaft protruded upward from the front ends of the tie rod coupling arms 38 and are arranged in substantially parallel with the inner end coupling parts 85 in a front view and in a side view. The outer ends 81 of the tie rods 45L, 45R are turnably coupled to the outer end coupling parts 86 via each ball joint and others.

The outer end coupling parts 86 are located outside the inner end coupling parts 85 in the vehicle width direction and are located in front of and on the downsides of the inner end coupling parts 85. Besides, the outer end coupling parts 86 are located on the downsides of and outside the lower coupling shafts 48 of the lower arm 30 in the vehicle width direction in a front view.

Accordingly, each tie rod 45L, 45R that linearly connects the inner end coupling part 85 and the outer end coupling part 86 is arranged with the tie rod diagonally inclined outward and downward in the vehicle width direction in a front view. Detailedly, each tie rod 45L, 45R is located in the lowest position in its outermost part in the vehicle width direction in the front view and is located in a lower position on the front side in a side view.

As shown in Figs. 3 to 8, the rocking vehicle 10 is provided with a rocking lock mechanism 90 that locks a rocking of the rocker mechanism 64.

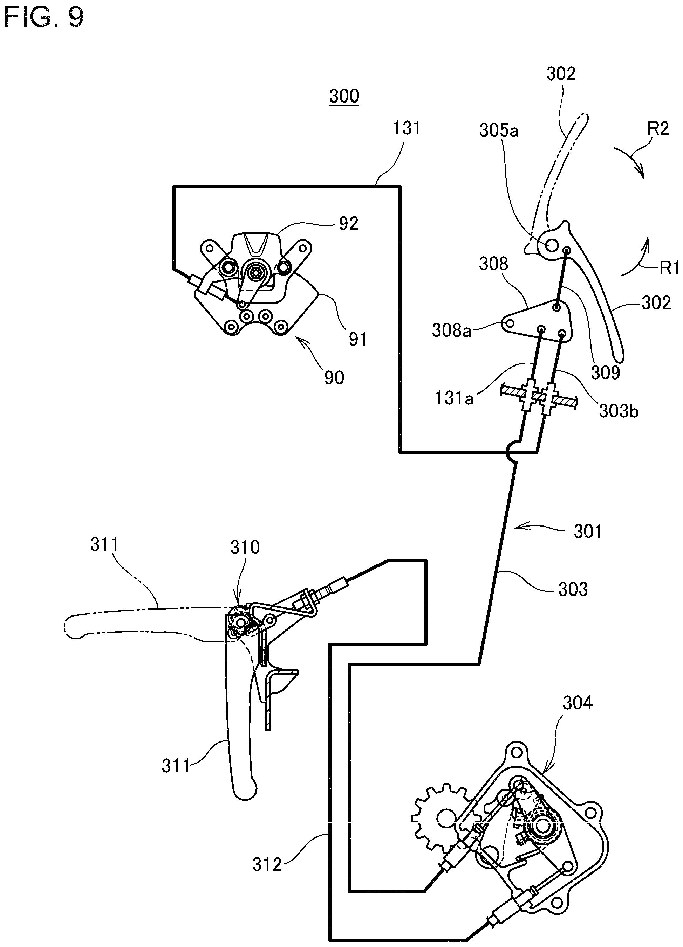

The rocking lock mechanism 90 is provided with a disc plate 91 fixed to the lower arm 30, a caliper (a rocking lock actuating part) 92 which is fixed to the main frame 14 and which can lock the movement of the disc plate 91, an operating lever 302 (a rocking lock operating part, refer to Figs. 3 and 9) to which operation for locking a rocking by a user is input, and a rocking lock operation cable 131 (a relay member, refer to Fig. 9) that connects the side of the operating lever 302 and the caliper 92.

The rocking lock mechanism 90 is a mechanism for locking the rocker mechanism 64 of the rocking vehicle 10 in an upright state and prevents the rocking of the rocker mechanism 64 when the rocking vehicle 10 is parked and the user walks, pushing the rocking vehicle 10. The disc plate 91 and the caliper 92 are arranged in the space K at the back of the head pipe in the side view shown in Fig. 5 and are arranged in the center in the vehicle width direction in a front view.

The disc plate 91 is fixed to the rear-side lower arm 54 of the lower arm 30. The rear-side lower arm 54 is arranged in a lower part of the front of the space K at the back of the head pipe in the side view shown in Fig. 5 and is provided along a rear face of the head pipe 13. The lower rocking central part 50 of the rear-side lower arm 54 is provided with a cylindrical protruded part 50b (see Fig. 8) protruded backward from the rear faces of the rear-side arm parts 54b.

The disc plate 91 is a plate formed substantially in the shape of a fan. Detailedly, the disc plate 91 is formed substantially in the shape of the fan the central angle of which is substantially 90 degrees. The disc plate 91 is arranged in an upright state so that a fan-shaped periphery 91a is an upper end and is arranged so that its center line in the vehicle width direction is substantially matched with the axis C of the head pipe 13.

The disc plate 91 is provided with a cut-out portion 91c cut out in the shape of a circular arc along a periphery of an upper part of the protruded part 50b of the rear-side lower arm 54 at its lower end.

As shown in Fig. 8, a front face of a lower part of the disc plate 91 abuts a rear face of the rear-side lower arm 54 and the disc plate is arranged in a state in which a lower edge of the cut-out portion 91c is put on the periphery of the protruded part 50b of the rear-side lower arm 54 from the upside. Next, the disc plate 91 is fastened and fixed to an upper part of the center in the lateral direction of the rear-side lower arm 54 by plural disc fixing bolts 93 inserted into the lower part of the disc plate 91 from the rear side. The disc plate 91 is extended upward along the rear face of the rear-side lower arm 54 and the periphery 91a at an upper end is located in an upper part of the space K at the back of the head pipe. The disc plate 91 is opposite to the rear face of the head pipe 13.

The caliper 92 is arranged in the upper part of the space K at the back of the head pipe in the side view shown in Fig. 5. The caliper 92 is provided with a blocky body 94 of the caliper having a groove open downward in a side view, a pair of plate like pads 95 supported in the groove of the body 94 of the caliper and an operating arm 96 for operating the pads 95 by being turned.

The caliper 92 is fixed to the forked frames 19 via plate like caliper stays 97 and is located in the center in the vehicle width direction. The forked frames 19 are provided with stays 19b (see Fig. 5) protruded forward on front faces of upper parts, the caliper stay 97 is fixed to the stay 19b by each bolt 98, and the caliper stay is extended downward in the space K at the back of the head pipe.

The body 94 of the caliper is fastened ad fixed to the caliper stays 97 by caliper fixing bolts 99 (see Fig. 8) inserted into right and left ends of the body 94 of the caliper. A turning shaft 96a of the operating arm 96 is located in the center in the vehicle width direction between the caliper fixing bolts 99.

An upper part of the disc plate 91 is arranged in the groove of the caliper 92 and is held between the pair of pads 95. The operating arm 96 of the caliper 92 is connected to the operating lever 302 via the rocking lock operation cable 131, when the operating arm 96 is operated via the operating lever 302 by the user, one of the pads 95 is pressed, the disc plate 91 is held between the pair of pads 95, and a rocking around the lower rocker shaft of the disc plate 91 is disenabled. Hereby, as a rocking of the disc plate 91 is locked and a rocking of the rear-side lower arm 54 to which the disc plate 91 is integrally fixed is locked, the whole rocking of the rocker mechanism 64 is locked.

In this embodiment, as the disc plate 91 and the caliper 92 are arranged in the space K at the back of the head pipe encircled by the head pipe 13, the upper main frame 15 and the lower main frame 16, the rocking lock mechanism 90 can be compactly arranged.

Besides, as the lower arm 30 is provided in a state in which the lower arm is divided in front of and at the back of the head pipe 13 and the disc plate 91 is fixed to the rear-side lower arm 54 in the space K at the back of the head pipe, the rocking lock mechanism 90 can be compactly arranged utilizing the space K at the back of the head pipe. Moreover, as the lower arm 30 is widely provided in a longitudinal direction, the rigidity of the lower arm 30 is enhanced.

Further, as the rear-side lower arm 54 is provided at the back of the head pipe 13, an overhang in front of the head pipe 13 of the whole lower arm 30 can be reduced. Therefore, the roll damper 31 can be compactly arranged in space formed in front of the front-side lower arm 53.

Fig. 9 is a schematic diagram showing the configuration of a lock mechanism 300 of the rocking vehicle 10.

As shown in Fig. 9, the rocking vehicle 10 is provided with the lock mechanism 300 that regulates the longitudinal movement of the rocking vehicle 10 and a rocking of the rocking vehicle 10.

The lock mechanism 300 is provided with a parking brake mechanism 301 that locks the rotation of the rear wheel 3 and the rocking lock mechanism 90.

The rocking lock mechanism 90 is provided with the operating lever 302, the rocking lock operation cable 131 and the caliper 92 as described above.

The parking brake mechanism 301 is provided with the operating lever (the parking brake operating part) 302, a parking brake actuating part 304 that locks the rotation of the rear wheel 3, a parking brake operation cable (a relay member) 303 that connects the operating lever 302 and the parking brake actuating part 304 and a lock releasing mechanism 310 that releases a locked state of the rear wheel 3.

The lock mechanism 300 is provided with an interlocking member 308 that interlocks the operation of the rocking lock mechanism 90 and the operation of the parking brake mechanism 301. The interlocking member 308 is a platelike member and one end is journaled to the side of the vehicle body via a turning shaft 308a. Besides, the other end of the interlocking member 308 is connected to the operating lever 302 via a connecting member 309 and is connected to one end of the rocking lock operation cable 131 and one end of the parking brake operation cable 303.

Detailedly, respective outer cables of the rocking lock operation cable 131 and the parking brake operation cable 303 are supported on the side of the vehicle body in the vicinity of the interlocking member 308 and one ends of respective inner cables 131a and 303b are connected to the other end of the interlocking member 308.

The operating lever 302 is turnably supported by a lever supporting shaft 305a supported on the side of the body frame 11.

When the operating lever 302 is operated so that it is turned, the interlocking member 308 is turned via the connecting member 309 with the turning shaft 308a in the center and the other end of the interlocking member 308 is moved. Hereby, the inner cables 131a, 303b are both operated, and the rocking lock operation cable 131 and the parking brake operation cable 303 are operated. That is, the operating lever 302 is an operating lever shared by the rocking lock mechanism 90 and the parking brake mechanism 301 and when the operating lever 302 is operated, the rocking lock mechanism 90 and the parking brake mechanism 301 are simultaneously operated.

In Fig. 9, the parking brake mechanism 301 and the rocking lock mechanism 90 are in a state in which each operation is released and the operating lever 302 is unoperated. When the operating lever 302 is operated from this state so that it is turned in an actuating direction R1 so as to locate the operating lever in a parking position, the parking brake mechanism 301 and the rocking lock mechanism 90 are actuated. Besides, a releasing direction R2 in which the operating lever 302 is released from the parking position is a reverse direction to the actuating direction R1.

As shown in Fig. 9, the lock releasing mechanism 310 is provided with a release lever (a lock release operating part) 311 operated by a user, a release operation cable (a relay member) 312 that connects the release lever 311 and the parking brake actuating part 304 and members described later and arranged in the parking brake actuating part 304.

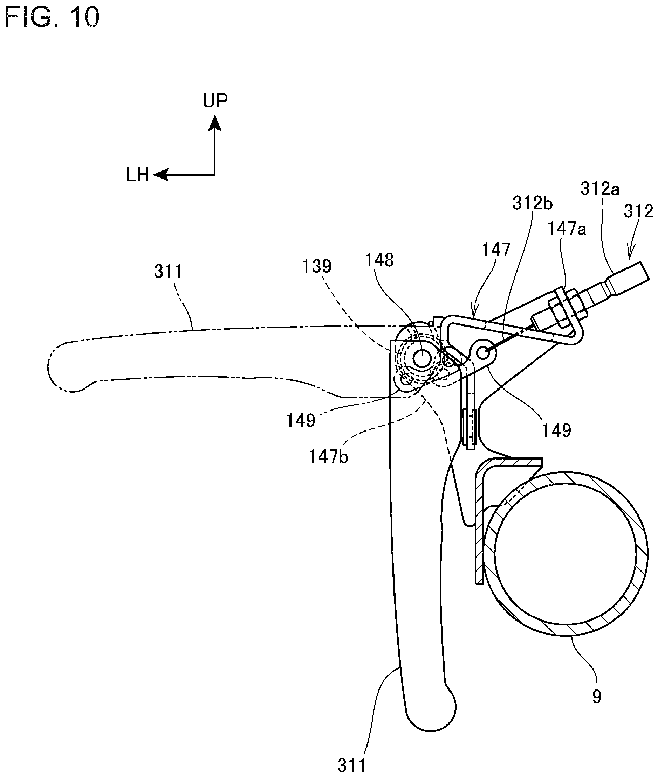

Fig. 10 is a sectional view viewed along a line X-X shown in Fig 1.

A rear lever stay 147 extended upward from an outer side is provided to the rear of the rear frame 9. The rear lever stay 147 is provided with a cable supporting part 147a that supports an end of the release operation cable 312 and a lever supporting part 147b that supports a lever supporting shaft (a turning supporting shaft) 148 extended in the longitudinal direction of the vehicle. The release lever 311 is journaled to the lever supporting shaft 148.

The release lever 311 is connected to the release operation cable 312 via a link member 149.

An outer cable 312a of the release operation cable 312 is supported by the cable supporting part 147a and an end of an inner cable 312b is connected to one end of the link member 149.

A base of the release lever 311 is journaled to the lever supporting shaft 148. The other end of the link member 149 is coupled to a part in the vicinity of the lever supporting shaft 148 of the release lever 311.

The release lever 311 is pressed by a spring 139 inserted between the release lever 311 and the lever supporting part 147b so that a body of the lever is vertically directed along the rear cover 114. When the user turns the release lever 311 outside in the direction of vehicle width as shown by virtual lines in Figs. 9 and 10, the inner cable 312b is pulled outside in the direction of vehicle width via the link member 149 and the operation of the release lever 311 is input to the parking brake actuating part 304. That is, in a state in which the user operates the release lever 311 in a parking release position shown by the virtual line, the body of the release lever 311 is directed in the direction of vehicle width. In this case, the parking release position is an operating position of the release lever 311 in which a lock of the rear wheel 3 is released.

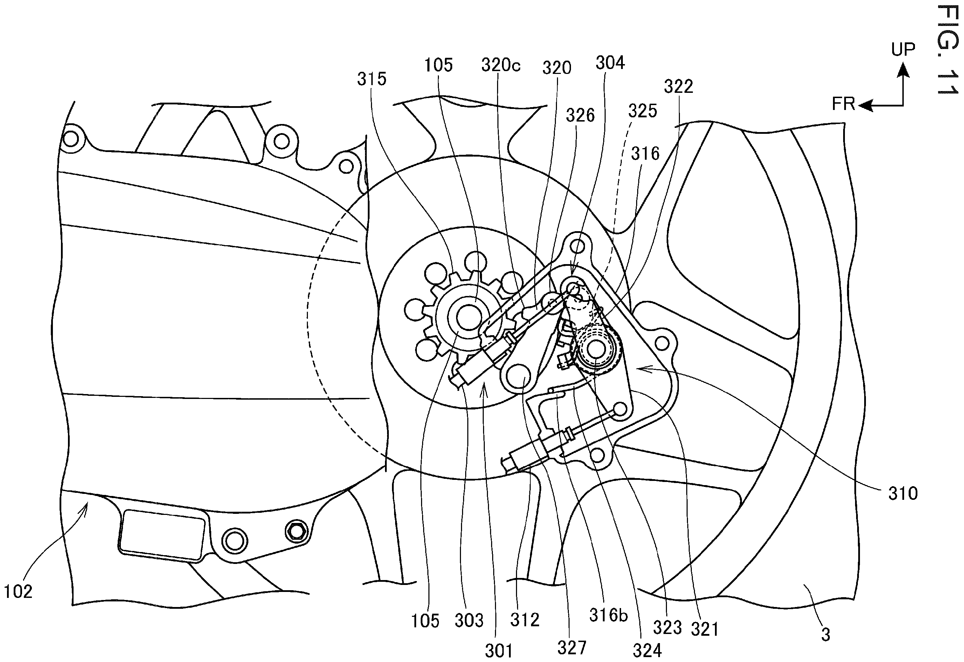

Fig. 11 is a side view showing the configuration of the parking brake actuating part 304 and its circumferential parts.

As shown in Fig. 11, an axle 105 of the rear wheel, the parking brake actuating part 304 and the lock releasing mechanism 310 are housed inside the rear of a transmission case 102.

The rear wheel axle 105 is turnably supported by the transmission case 102. The rear wheel 3 is fixed to the rear wheel axle 105 and is rotated integrally with the rear wheel axle 105. The output of an engine 101 is transmitted to the rear wheel axle 105 via a belt and gears inside the transmission case 102 and the rotation of the rear wheel axle 105 rotates the rear wheel 3.

The rear wheel axle 105 is provided with a stopper gear 315 rotated integrally with the rear wheel axle 105. The parking brake mechanism 301 regulates the rotation of the rear wheel 3 by regulating the rotation of the stopper gear 315 by the parking brake actuating part 304.

The transmission case 102 is provided with an actuating part housing 316 arranged close to the rear wheel axle 105 at the back of the rear wheel axle 105.

The parking brake actuating part 304 is housed in the actuating part housing 316.

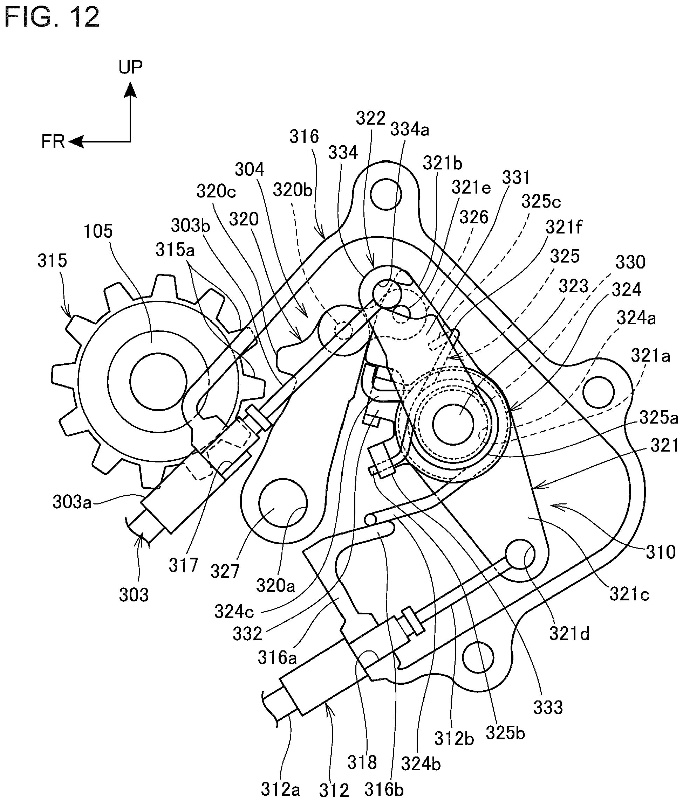

Fig. 12 is a side view showing the configuration of the parking brake actuating part 304. In Fig. 12, an unoperated state of the parking brake actuating part 304 is shown.

As shown in Figs. 11 and 12, the actuating part housing 316 is provided with a cable support 317 that supports an end of an outer cable 303a of the parking brake operation cable 303 and a cable support 318 that supports an end of the outer cable 312a of the release operation cable 312 on a front wall 316a.

The inner cable 303b of the parking brake operation cable 303 and the inner cable 312b of the release operation cable 312 pierce the wall 316a and are wired inside the actuating part housing 316.

The parking brake actuating part 304 is provided with a lock pole 320 which can be engaged with the stopper gear 315, a first arm 321 one end of which is connected to the release operation cable 312 and the other end of which is connected on the side of the lock pole 320 and a second arm 322 which is supported coaxially with the first arm 321 and one end of which is connected to the parking brake operation cable 303.

Besides, the parking brake actuating part 304 is provided with an arm supporting shaft 323 that turnably journals the first arm 321 and the second arm 322, first pressing means 324 that presses the second arm 322 on the reverse side to the side of the lock pole 320, second pressing means 325 that presses the second arm 322 on the side of the first arm 321, an arm connecting link 326 that connects the other end of the first arm 321 to the lock pole 320 and a pole supporting shaft 327 that supports the lock pole 320.

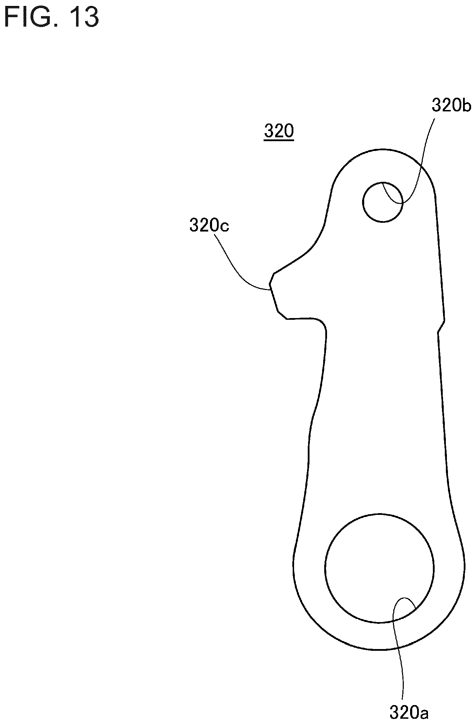

Fig. 13 is a side view showing the lock pole 320.

As shown in Figs 12 and 13, the lock pole 320 is made rod-shaped and is provided with a coupling part 320a supported by the pole supporting shaft 327 at its base. The pole supporting shaft 327 is provided on the rear downside of the stopper gear 315 in the actuating part housing 316 and is extended in the direction of vehicle width in parallel with the rear wheel axle 105. The coupling part 320a is a hole fitted to the pole supporting shaft 327. The lock pole 320 can be turned with the pole supporting shaft 327 in the center.

The lock pole 320 is provided with a link connecting part on the side of the pole 320b to which one end of the arm connecting link 326 is connected at its end. Besides, the lock pole 320 is provided with an engaging part 320c protruded forward from the front that faces the stopper gear 315 on the side of the stopper gear 315 in the vicinity of the link connecting part on the side of the pole 320b at its end.

When the engaging part 320c is engaged between teeth 315a of the stopper gear 315, the rotation of the rear wheel axle 105 is regulated and the rotation of the rear wheel 3 is locked.

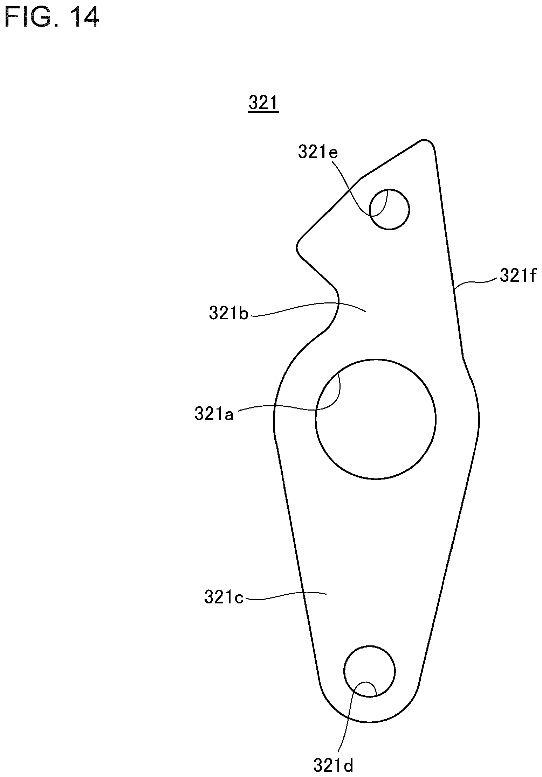

Fig. 14 is a side view showing the first arm 321.

The first arm 321 is a platelike member extended in a direction perpendicular to the rear wheel axle 105.

The first arm 321 is provided with a coupling part 321a coaxially journaled to the arm supporting shaft 323, an actuating-side arm part 321b extended from the coupling part 321a on the side of the arm connecting link 326 and a releasing-side arm part 321c extended from the coupling part 321a on the side of the inner cable 312b.

The coupling part 321a is a hole into which a part of the second arm 322 is fitted.

A cable connecting part 321d to which the inner cable 312b of the release operation cable 312 is connected is formed at the end of the releasing-side arm part 321c.

An arm-side link connecting part 321e to which the other end of the arm connecting link 326 is connected is formed at the end of the actuating-side arm part 321b. That is, the first arm 321 is connected to the lock pole 320 via the arm connecting link 326.

The arm supporting shaft 323 is extended in the direction of vehicle width in parallel with the rear wheel axle 105 and is arranged at the back of the lock pole 320 so that the lock pole 320 is located between the stopper gear 315 and the arm supporting shaft 323. The first arm 321 can be turned with the arm supporting shaft 323 in the center.

Besides, the first arm 321 is provided with a spring connecting part 321f to which one end of the second pressing means 325 is connected at a rear edge of the actuating-side arm part 321b.

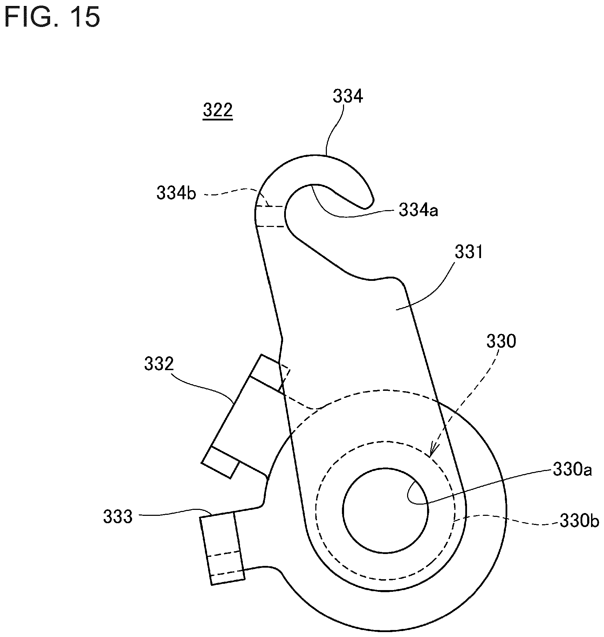

Fig. 15 is a side view showing the second arm 322.

The second arm 322 is provided with a cylindrical part 330 fitted to the arm supporting shaft 323 and extended in parallel with the rear wheel axle 105, a body 331 of the arm extended in a radial direction from the cylindrical part 330, a first spring connecting part 332 and a second spring connecting part 333 respectively extended in the radial direction from the side of the cylindrical part 330. The first spring connecting part 332 and the second spring connecting part 333 are extended with both spring connecting parts directed on the side of the stopper gear 315 at different angles from the arm body 331.

The arm body 331 is provided with an actuating-side cable connecting part 334 to which the inner cable 303b of the parking brake operation cable 303 is connected at its end. The actuating-side cable connecting part 334 is provided with a cable supporting part 334a open backward and hooked and a through hole 334b for the cable which the inner cable 303b passes. A cylindrical joint at an end of the inner cable 303b is fitted into the cable supporting part 334a.

The second arm 322 is turnably provided with the arm supporting shaft 323 in the center by fitting the arm supporting shaft 323 to an inner face 330a of the cylindrical part 330. The first arm 321 can be turned with the arm supporting shaft 323 in the center by fitting the coupling part 321a to a periphery 330b of the cylindrical part 330. That is, the second arm 322 and the first arm 321 are supported coaxially with the arm supporting shaft 323 and are arranged so that the lock pole 320 is located between these arms and the stopper gear 315.

The first pressing means 324 is a helical torsion spring and is arranged around the cylindrical part 330 because the periphery 330b of the cylindrical part 330 of the second arm 322 is passed inside a coil part 324a.

One end 324b pulled out of the coil part 324a of the first pressing means 324 is supported by a rib-shaped spring supporting wall 316b formed in the actuating part housing 316 and the other end 324c pulled out of the coil part 324a is fixed to the first spring connecting part 332 of the second arm 322.

The first pressing means 324 presses the second arm 322 so that it is turned in a reverse direction to the side on which the lock pole 320 is located.

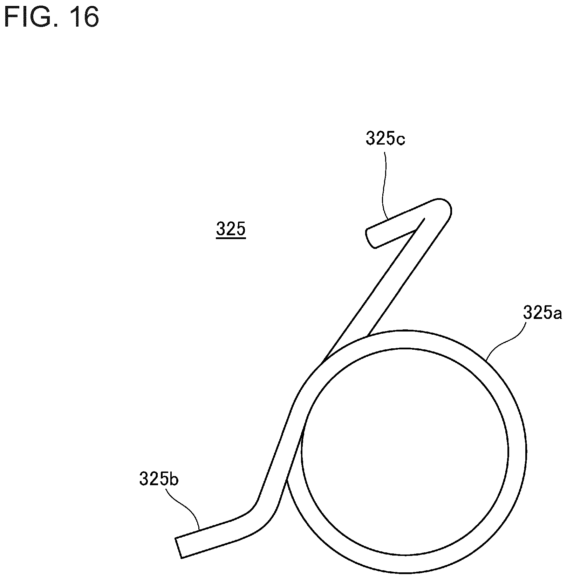

Fig. 16 is a side view showing the second pressing means 325.

The second pressing means 325 is a helical torsion spring and is arranged around the cylindrical part 330 because the periphery 330b of the cylindrical part 330 of the second arm 322 is passed inside a coil part 325a.

One end 325b pulled out of the coil part 325a of the second pressing means 325 is fixed to the second spring connecting part 333 of the second arm 322 and the other end 325c pulled out of the coil part 325a is supported by the spring connecting part 321f of the first arm 321.

The second pressing means 325 presses the first arm 321 so that it is turned on the side on which the lock pole 320 is located. Besides, the first arm 321 can be turned relatively to the second pressing means 325 against the second pressing means 325 laid between the first arm 321 and the second arm 322.

As shown in Fig. 12, in "an unoperated state" in which the operation of the parking brake mechanism 301 is released, the inner cable 303b of the parking brake operation cable 303 is located in an initial position.

In the unoperated state, the second arm 322 is halted with a rear edge of the operating lever 302 and a front margin of the first arm 321 contacting with each other in a state that force is applied in a direction in which the inner cable 303b is pulled out by the pressure of the first pressing means 324.

Besides, in the unoperated state, the first arm 321 is located in a turning position in which the actuating-side arm part 321b is overlapped with the arm body 331 of the second arm 322 in an axial view of the arm supporting shaft 323.

Further, in the unoperated state, a position of the lock pole 320 is regulated by the first arm 321 via the arm connecting link 326 and the engaging part 320c is located in a position apart from the stopper gear 315. Therefore, the rear wheel 3 can be rotated.

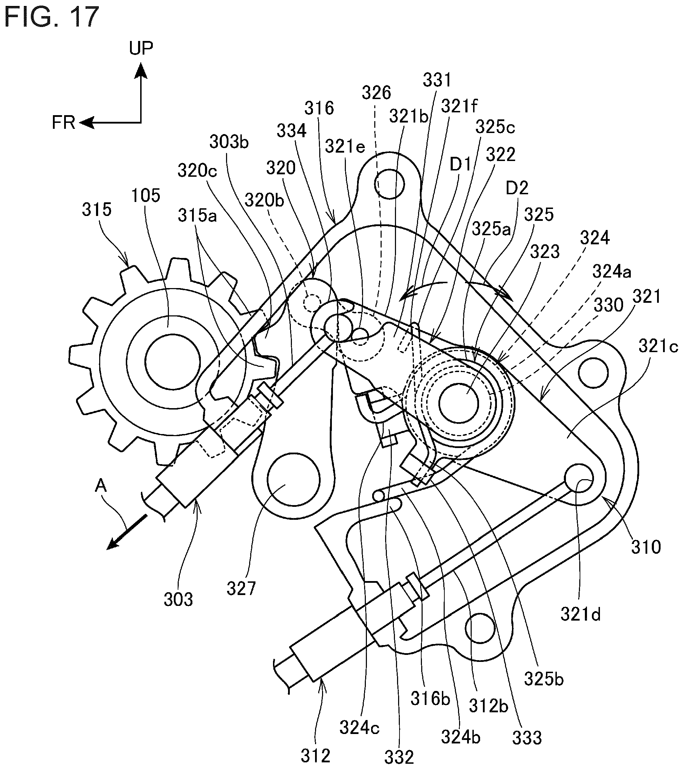

Fig. 17 shows "an actuated state" in which the parking brake mechanism 301 is actuated.

When the operating lever 302 is operated in the parking position, the parking brake mechanism 301 is turned "an actuated state".

In the actuated state, as the inner cable 303b is pulled in a direction shown by an arrow A in Fig. 17 from the initial position, the second arm 322 is turned in a locking direction D1 against the pressure of the first pressing means 324.

In this case, the locking direction D1 is a direction in which the second arm 322 and the first arm 321 are turned on the side of the stopper gear 315 and when the second arm 322 and the first arm 321 are turned in the locking direction D1, the rotation of the rear wheel 3 is locked. Besides, a lock releasing direction D2 reverse to the locking direction D1 is a turning direction for releasing a locked state of the rear wheel 3.

In the actuated state, as the second spring connecting part 333 is turned in the locking direction D1 integrally with the second arm 322, the first arm 321 is turned in the locking direction D1 integrally with the second arm 322 in a state in which the first arm is pressed by the other end 325c of the second pressing means 325. Hereby, in the actuated state, the lock pole 320 is turned on the side of the stopper gear 315 by the first arm 321 via the arm connecting link 326 and the engaging part 320c is engaged with the stopper gear 315.

In the actuated state, when the parking position of the operating lever 302 is released, the first arm 321 is turned in the lock releasing direction D2 by the pressure of the first pressing means 324 and the actuated state is restored to the unoperated state.

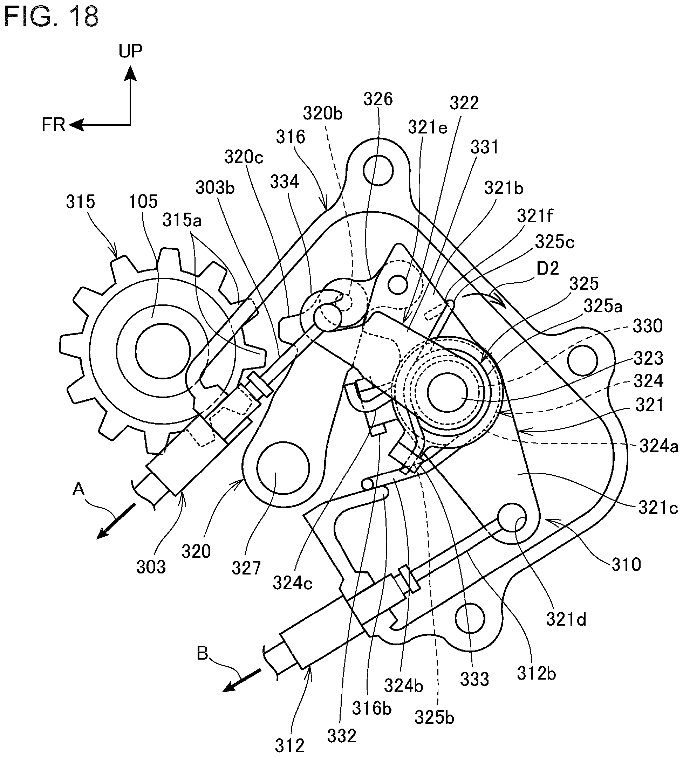

Fig. 18 shows "a released state" of the parking brake mechanism 301.

The released state means a state in which the actuated state is released by the lock releasing mechanism 310.

In the actuated state, when the release lever 311 is operated in the parking release position, the actuated state is turned "a released state".

In the released state, as the inner cable 312b is pulled in a direction shown by an arrow B in Fig. 18, the first arm 321 is turned in the lock releasing direction D2 against the pressure of the second pressing means 325.

Detailedly, in the released state, the parking position of the operating lever 302 remains maintained, the first arm 321 is turned in the lock releasing direction D2 relatively to the second arm 322 in a state in which the second arm is fixed by the inner cable 303b, and the first arm is located in the similar turning position to a case of "the unoperated state". Hereby, the lock pole 320 is turned in a direction apart from the stopper gear 315 by the first arm 321 via the arm connecting link 326 and the engagement of the engaging part 320c and the stopper gear 315 is released.

That is, only a locked state of the rear wheel 3 by the parking brake mechanism 301 can be released with the parking position of the operating lever 302 maintained by actuating the lock releasing mechanism 310. The lock releasing means 310 is provided with the first arm 321, the second arm 322, the arm connecting link 326, the arm supporting shaft 323, the first pressing means 324 and the second pressing means 325 in addition to the release lever 311 and the release operation cable 312, and many components are shared with the parking brake actuating part 304.

Besides, in the released state, when the parking release position of the release lever 311 is released, the first arm 321 is turned in the locking direction D1 by the pressure of the second pressing means 325 and the released state is restored to the actuated state. That is, only while the release lever 311 is set in the parking release position, the engagement of the lock pole 320 and the stopper gear 315 is temporarily released.

Next, a procedure for operation when the rocking vehicle 10 is parked and is pushed while the user is walking will be described.

As shown in Fig. 9, in a halted state before the rocking vehicle 10 is parked, the operating lever 302 is in an unoperated state and is directed downward. In this state, the parking brake actuating part 304 is in "an unoperated state" shown in Fig. 12.

Next, when the operating lever 302 is operated so that it is turned in the actuating direction R1 to locate the operating lever in the parking position, the parking brake actuating part 304 is turned "the actuated state" shown in Fig. 17, the rotation of the rear wheel 3 is locked, a rocking of the rocker mechanism 64 is locked, and the rocking vehicle 10 is turned "a parked state" in which both the parking brake mechanism 301 and the rocking lock mechanism 90 are actuated. Therefore, the rocking vehicle 10 can be suitably parked.

When only a state in which the rear wheel 3 is locked is released from the parked state, the parked state is turned "a pushed state while walking" in which the user can walk, pushing the rocking vehicle 10 while a rocking of the rocker mechanism 64 remains locked.

When the release lever 311 is operated in the parking release position in "the parked state", the lock releasing mechanism 310 is actuated, the parking brake actuating part 304 is turned "the released state" shown in Fig. 18, and a state in which the rear wheel 3 is locked is released. Hereby, the rocking vehicle 10 is turned "the pushed state while walking". When the user is walking, pushing the rocking vehicle 10 in "the pushed state while walking", the user can grasp a grab bar 115. In this embodiment, as the release lever 311 is located in the vicinity of the grab bar 115, the operability of the release lever 311 is satisfactory.

In this embodiment, as both the parking brake mechanism 301 and the rocking lock mechanism 90 can be actuated by only operating the operating lever 302, the rocking vehicle 10 can be turned "the parked state" by simple operation and the number of operating levers can be reduced.

Besides, to turn the rocking vehicle 10 "the pushed state while walking", the rocking vehicle 10 is required to be once turned "the parked state" so as to halt the vehicle and afterward, the release lever 311 is required to be operated. Therefore, the rocking vehicle 10 can be prevented from being carelessly turned "the pushed state while walking".

Further, as "the parked state" can be turned "the pushed state while walking" by operating the release lever 311 in the parking release position in a state in which the operating lever 302 remains maintained in the parking position, "the parked state" can be shifted to "the pushed state while walking" by simple operation.

As described above, according to the embodiment to which the present invention is applied, the rocking vehicle 10 is provided with the parking brake mechanism 301 including the stopper gear 315 provided to the rear wheel axle 105 that transmits power to the rear wheel 3, the lock pole 320 which is provided adjacent to the stopper gear 315 and which locks the rear wheel 3 by being engaged with the stopper gear 315 and the operating lever 302 that engages the lock pole 320 with the stopped gear 315 by operation, and is provided with the lock releasing mechanism 310 that actuates the lock pole 320 so as to temporarily release the engagement of the lock pole 320 and the stopper gear 315 in a state in which the operating lever 302 remains located in the parking position. Hereby, the engagement of the lock pole 320 and the stopper gear 315 can be temporarily released when the lock pole 320 is made to actuate by the lock releasing mechanism 310 even if the operating lever 302 is located in the parking position. Therefore, a locked state by the parking brake mechanism 301 can be readily released.

Besides, the lock releasing mechanism 310 is provided with the release lever 311 that actuates the lock releasing mechanism 310 by operation, the first arm 321 one end of which is connected to the release lever 311 and the other end of which is connected to the lock pole 320 and the second arm 322 which is supported coaxially with the first arm 321 and one end of which is connected to the operating lever 302, the second arm 322 is pressed on the reverse side to the lock pole 320 by the first pressing means 324, and the first arm 321 can be turned relatively to the second arm 322 against the second pressing means 325 laid between the first arm 321 and the second arm 322. Hereby, the first arm 321 is turned relatively to the second arm 322 against the second pressing means 325 by operating the lock releasing mechanism 310 and the engagement of the lock pole 320 and the stopper gear 315 can be released. Therefore, the lock releasing mechanism 310 can be realized with simple structure.

Further, as the release lever 311 is supported in the vicinity of the grab bar 115 which can be grasped by the occupant, the release lever 311 can be readily operated.

Furthermore, as the release lever 311 is a lever the lever supporting shaft 148 of which is directed in the longitudinal direction of the vehicle and is operated outside in the lateral direction of the vehicle body when a lock is released by the lock releasing mechanism 310, the user can readily recognize that the release lever 311 is located in the parking release position.

The above-mentioned embodiment shows one mode to which the present invention is applied and the present invention is not limited to the embodiment.

In the embodiment, the disc plate 91 and the caliper 92 are described as the rocking lock mechanism for an example, however, the rocking lock mechanism may be also anything that can lock a rocking of the rocker mechanism 64.

Besides, in the embodiment, the engine is described as the power unit for an example, however, the present invention is not limited to this, and for example, a power unit having a configuration using an electric motor driven by a battery may be also used.

Further, in the embodiment, the three-wheeled vehicle provided with the front wheels 2L, 2R and one rear wheel is described as the rocking vehicle for an example, however, the present invention is not limited to this, and for example, the present invention may be also applied to a four-wheel vehicle provided with two rear wheels.

### Reference Signs List:

- 3: Rear wheel (Driving wheel)
- 105: Rear wheel axle (Axle that transmits power to driving wheel)
- 115: Grab bar (Grab rail)
- 148: Lever supporting shaft (Turn supporting shaft)
- 301: Parking brake mechanism
- 302: Operating lever (Parking brake operating part)
- 310: Lock releasing mechanism
- 311: Release lever (Lock release operating part)
- 315: Stopper gear
- 320: Lock pole
- 321: First Arm
- 322: Second arm
- 324: First pressing means
- 325: Second pressing means

## Claims

1. A vehicle comprising a parking brake mechanism (301) including: a stopper gear (315) provided to an axle (105) that transmits power to a driving wheel (3); a lock pole (320) which is provided adjacent to the stopper gear (315) and which locks the driving wheel by being engaged with the stopper gear (315); and a parking brake operating part (302) that engages the lock pole (320) with the stopper gear (315) by operation,
wherein the vehicle is provided with a lock releasing mechanism (310) that actuates the lock pole (320) so as to temporarily release the engagement of the lock pole (320) and the stopper gear (315) in a state in which the parking brake operating part (302) remains located in a parking position.

2. The vehicle according to Claim 1,
wherein: the lock releasing mechanism (310) is provided with a lock release operating part (311) that actuates the lock releasing mechanism (310) by operation, a first arm (321) having one end connected to the lock release operating part (311) and the other end connected to the lock pole (320), and a second arm (322) which is supported coaxially with the first arm (321) and one end of which is connected to the parking brake operating part (302);
the second arm (322) is pressed on the reverse side to the lock pole (320) by first pressing means (324); and
the first arm (321) can be turned relatively to the second arm (322) against second pressing means (325) laid between the first arm (321) and the second arm (322).

3. The vehicle according to Claim 2, wherein:
the lock release operating part (311) is supported in the vicinity of a grab rail (115) which an occupant can grasp.

4. The vehicle according to Claim 2 or 3, wherein:
the lock release operating part (311) is a lever a turn supporting shaft (148) of which is directed in a longitudinal direction of the vehicle; and
the lock release operating part (311) is operated outside in a lateral direction of a vehicle body when a lock is released.

## Patentansprüche

1. Fahrzeug, das einen Parkbremsmechanismus (301) aufweist, der enthält:
ein Stopperzahnrad (315), das an einer Achse (105) vorgesehen ist, die Leistung auf ein Antriebsrad (3) überträgt; eine Sperrstange (320), die neben dem Stopperzahnrad (315) vorgesehen ist und die das Antriebsrad durch Eingriff in das Stopperzahnrad (53) sperrt; und ein Parkbremsbetätigungsteil (302), durch dessen Betätigung die Sperrstange (315) in das Stopperzahnrad (315) eingreift,
wobei das Fahrzeug mit einem Sperrfreigabemechanismus (310) vorgesehen ist, der die Sperrstange (320) betätigt, um so den Eingriff der Sperrstange (320) und des Stopperzahnrads (315) in einem Zustand, in dem das Parkbremsbetätigungsteil (302) in einer Parkposition verbleibt, zeitweilig zu lösen.

2. Fahrzeug nach Anspruch 1,
wobei:
der Sperrfreigabemechanismus (310) mit einem Sperrfreigabebetätigungsteil (311) vorgesehen ist, das bei Betätigung den Sperrmechanismus (310) auslöst, ein erster Arm (321), der ein Ende aufweist, das mit dem Sperrfreigabebetätigungsteil (311) verbunden ist, und das andere Ende mit der Sperrstange (320) verbunden ist, und ein zweiter Arm (322), der koaxial mit dem ersten Arm (321) gehalten wird, und ein Ende davon mit dem Parkbremsbetätigungsteil (302) verbunden ist;
der zweite Arm (322) an der Rückseite an den Sperrstift (320) durch erste Pressmittel (324) gepresst wird; und
der erste Arm (321) bezüglich des zweiten Arms (322) gegen zweite Pressmittel (325), die zwischen dem ersten Arm (321) und dem zweiten Arm (322) liegen, gedreht werden kann.

3. Fahrzeug nach Anspruch 2, wobei:
das Sperrfreigabebetätigungsteil (311) in der Nähe einer Greifschiene (115) gehalten wird, die ein Fahrer greifen kann.

4. Fahrzeug nach Anspruch 2 oder 3, wobei:
das Sperrfreigabebetätigungsteil (311) ein Hebel ist, von dem eine Drehunterstützungswelle (148) in der Fahrzeuglängsrichtung ausgerichtet ist; und
das Sperrfreigabebetätigungsteil (311) außen in einer seitlichen Richtung der Fahrzeugkarosserie betätigt wird, wenn eine Sperre freigegeben wird.

## Revendications

1. Véhicule comprenant un mécanisme de frein de stationnement (301) incluant : un engrenage de butée (315) prévu sur un essieu (105) qui transmet de la puissance à une roue d'entraînement (3) ; une tringle de verrouillage (320) qui est prévue de manière adjacente à l'engrenage de butée (315) et qui verrouille la roue d'entraînement en étant mise en prise avec l'engrenage de butée (315) ; et une partie de mise en fonctionnement de frein de stationnement (302) qui met en prise la tringle de verrouillage (320) avec l'engrenage de butée (315) par mise en fonctionnement,
dans lequel le véhicule est doté d'un mécanisme de libération de verrouillage (310) qui actionne la tringle de verrouillage (320) de sorte à libérer temporairement la mise en prise de la tringle de verrouillage (320) et l'engrenage de butée (315) dans un état dans lequel la partie de mise en fonctionnement de frein de stationnement (302) reste située dans une position de stationnement.

2. Véhicule selon la revendication 1,
dans lequel : le mécanisme de libération de verrouillage (310) est doté d'une partie de mise en fonctionnement de libération de verrouillage (311) qui actionne le mécanisme de libération de verrouillage (310) par mise en fonctionnement, un premier bras (321) présentant une extrémité raccordée à la partie de mise en fonctionnement de libération de verrouillage (311) et l'autre extrémité raccordée à la tringle de verrouillage (320), et un second bras (322) qui est supporté coaxialement au premier bras (321) et dont une extrémité est raccordée à la partie de mise en fonctionnement de frein de stationnement (302) ;
le second bras (322) est pressé sur le côté envers sur la tringle de verrouillage (320) par un premier moyen de pressage (324) ; et
le premier bras (321) peut être tourné par rapport au second bras (322) contre des seconds moyens de pressage (325) posés entre le premier bras (321) et le second bras (322).

3. Véhicule selon la revendication 2, dans lequel :
la partie de mise en fonctionnement de libération de verrouillage (311) est supportée à proximité d'une main courante (115) qu'un occupant peut saisir.

4. Véhicule selon la revendication 2 ou 3, dans lequel :
la partie de mise en fonctionnement de libération de verrouillage (311) est un levier dont un arbre de support de tour (148) est dirigé dans une direction longitudinale du véhicule ; et
la partie de mise en fonctionnement de libération de verrouillage (311) est mise en fonctionnement en dehors dans une direction latérale d'un corps de véhicule lorsqu'un verrouillage est libéré.
